# EUROPEAN PATENT SPECIFICATION

(11) **EP 0 385 960 B1**
(45) Date of publication and mention of the grant of the patent: **20.04.1994**
(21) Application number: 90850082.0
(22) Date of filing: 28.02.1990
(51) Int. Cl.: A23K 1/00, A23K 1/175, A23P 1/02

(54) **Mineral mix and procedure for manufacturing same**
Mineral-Mischfuttermittel und Verfahren zu seiner Herstellung
Fourrage minéral mélangé et son procédé de fabrication

(30) Priority: 03.03.1989 FI 891046
(43) Date of publication of application: 05.09.1990
(73) Proprietor: SUOMEN REHU OY, 00241 Helsinki (FI)
(72) Inventor: Laiho, Kalevi, SF-00740 Helsinki (FI); Haarasilta, Asko, SF-01600 Vantaa (FI); Lappalainen, Matti, SF-70260 Kuopio (FI); Jokinen, Jukka, SF-02180 Vantaa (FI); Holm, Jan-Olof, P1 105 SF 00241 Helsinki (FI)
(74) Representative: Mossmark, Anders

(56) References cited:
- EP-A- 0 030 567
- EP-A- 0 093 994
- EP-A- 0 253 705
- EP-A- 0 346 908
- FR-A- 2 620 599
- GB-A- 1 148 307
- DERWENT FILE SUPPLIER WPIL, 1988, accession no. 88-067541 [10], Derwent Publications Ltd, London, GB; & JP-A-63 021 276 (SANYO KOKUSAKU PULP) 28-01-1988
- DIE MÜHLE + MISCHFUTTERTECHNIK, vol. 115, no. 32, 1978, pages 457-459, Detmold, DE; C.M. VAN GINNEKEN: "Das Granulieren von Mineralfutter - eine neue Technologie"
- Technologie des Zuckers (1955) pages 520-530 (Verein der Zuckerindustrie)(M. Schaper, Hannover)

## Description

The present invention concerns a mineral mix rich in mineral substances. The invention further concerns a procedure for manufacturing said mineral mix. More specifically, the invention concerns a mineral mix for administration to animals, particularly to domestic animals and specifically to ruminants in connection with feeding, and a procedure for manufacturing same.

In order to satisfy the mineral requirements of animals, the animals are given mineral additives. Mineral additives for poultry, as well as frequently mineral additives for pigs, are administered by adding the requisite mineral additives to the concentrated feed at the feed factory already. It is thus understood that these animals are usually given no separate mineral additives.

The nutritional requirements of cattle are met with concentrates. However, the mineral requirements of cattle are usually met by administering a separate mineral substance or mineral mix which does not actually constitute fodder, that is, usually has no food value. The mineral mix is usually administered to cattle in connection with concentrate dosage. The mineral mix is understood to be a mixture containing a relatively great amount, i.e., more than half, suitably more than 75% by weight, advantageously more than 90% by weight, of mineral substances, that is physiologically tolerated inorganic substances.

The drawback embarrassing mineral mixes in present use is dusting and caking of the mixes. Attempts have been made to add molasses to mineral mixes in order to improve the palatability of the mixes. It is however a fact that adding molasses causes caking of the mineral mix, and one has only been able to add minor quantities of molasses, e.g. on the order of 2%.

The European patent application 0093994 discloses a mineral mix having a high content of sodium chloride. Only a small part of the granules have a size between 1 and 4 mm.

The European patent application 0030567 describes a process for granulating dusty materials. The materials to be granulated are food for animals and the granulating is carried out by means of a mixture of water and a bonding binder such as molasses.

The French patent specification 2620599 describes a method and an apparatus for making food pellets for animals. The method consists in mixing fine powders of a mineral element together with other substances and making pellets through rotation.

No usable method is known at present by which mineral mixes, and particularly mineral mixes intended for ruminants, could be granulated.

The object of the present invention is to eliminate the drawbacks mentioned.

The specific object of the invention is to provide a novel mineral mix intended for domestic animals, particularly for ruminants, which will not raise dust in likeness with mineral mixes of prior art nor cake in likeness with mineral mixes of prior art. The object is to provide a mineral mix which is easy to handle and suitable to be administered to animals as it is.

It is a further object of the invention to provide a mineral mix with higher food value than that of mineral feeds known heretofore, i.e., possessing nutritional value as an energy source for animals.

It is a further object of the invention to provide a mineral mix having the sodium therein contained, partly at least, in a form other than inorganic.

It is a further object of the invention to provide a novel procedure for manufacturing a mineral mix having the properties mentioned above.

Regarding the features which are characteristic of the invention, reference is made to the claims section.

The invention is based on the fundamental idea that the mineral mix is granulated, i.e., the mix is presented in granular form.

Granulated state is in this context understood to mean that the granules have been formed of the dust-like particles of the mineral mix by cohesion through effect of a bonding agent. The granules will then present a porous structure; they will be superior in edibility and palatability e.g. to mineral mix pellets pelleted with the aid of an extruder or a collar-type pelleting machine.

Granulated state is further understood to mean that the granules have not been compressed, i.e., the material has not been produced by pressing.

According to the present invention the mineral mix contains Na-gluconate as bonding agent, i.e., to the mix is added a novel, energy-containing bonding agent, physiologically acceptable Na-gluconate.

Na gluconate is produced in large quantities by fermenting. After separating the Na gluconate and the cells the Na gluconate is crystallized. The mother liquor obtained on crystallizing contains Na gluconate and other salts of organic acids, certain neutral substances, and sugars.

It has unexpectedly been noted in investigations and experiments now carried out that the said Na gluconate mother liquor is eminently suitable for use as bonding agent in granulating mineral mixes on account of the Na gluconate, organic Na salts, sugars and certain neutral substances which it contains, and furthermore on account of certain other advantageous properties which it possesses.

The calculated energy contents of Na gluconate are on an order higher than 10 MJ/kg, e.g. about 12 MJ/kg.

When Na gluconate mother liquor is used for granulating agent, there is no absolute need to add any other granulating agent to the mineral mix. The energy content of the mineral mix and certain other properties are enhanced at the same time.

It has further been unexpectedly noted when using Na gluconate as bonding agent that addition of molasses to such mineral mix causes no caking of the mix, not even at remarkably high molasses contents. It is possible to add molasses to mineral mix granulated with Na gluconate, e.g. 0 to 20% by weight, suitably 4 to 15% by weight, advantageously 4 to 10% by weight.

Furthermore, when using Na gluconate mother liquor for granulating agent in a mineral mix, one may partly or totally omit NaCl salt and other sodium salts e.g. from poultry feed, thereby achieving e.g. increased strength of hen egg shells.

According to investigations that have been carried out, the above-mentioned gluconates and/or other salts of organic acids, neutral substances and sugars are eminently suitable to be used in connection with granulating mineral mixes. When Na gluconate is used as bonding agent in a mineral mix as taught by the invention, the mineral mix can be granulated to a well-keeping, easy to handle, non-caking and conveniently dispensed form.

Furthermore, when specifically an organic bonding agent is used, the food value of the mineral mix is enhanced owing to the invention.

The mineral mix of the invention contains Na gluconate 1.5 to 6% by weight, advantageously 2 to 5% by weight, for instance about 3% by weight.

The feed may in addition contain Na salts of organic acids, such as Na citrate, Na oxalate, Na lactate, Na acetate, Na fumarate and/or Na succinate, and possibly other, for instance aqueous (e.g. 50% by weight water), Na salts deriving from the sodium gluconate manufacturing process; the total quantity of said salts may be e.g. 0 to 80% by weight, e.g. 30 to 80% by weight, of the Na gluconate quantity. The mineral mix may further contain neutral substances deriving from the sodium gluconate manufacturing process, e.g. sorbitol, erythritol and/or glycerol, in aggregate quantity e.g. 0 to 20% by weight, such as 10 to 20% by weight, of the total Na gluconate quantity. The mineral mix may further contain e.g. sugars, such as fructose, glucose, saccharose, trisaccharides, etc. e.g. 0 to 20% by weight of the total Na gluconate quantity.

All percentages in this disclosure and in the claims are stated as per cent by weight, calculated on the dry matter.

Na gluconate solution is understood to mean Na gluconate solution obtained by fermentation and/or solution containing Na gluconate that has been obtained in connection with any Na gluconate manufacturing process or when crystallizing Na gluconate.

The Na gluconate is conveniently obtained in connection with a Na gluconate fermentation process, e.g. with glucose for raw material, e.g. with Aspergillus niger for production strain. Naturally, Na gluconate derived from another process and/or fermented with the aid of another microbe strain may equally be used. When the mould Aspergillus niger is employed, fermentation is implemented in conventional manner, e.g. with lye for neutralizing agent. The fermentation process is in itself known in the art and will not be more closely described in this connection. The cells are filtered out after the fermentation process, leaving the Na gluconate solution with dry matter content e.g. on the order of 50% by weight, from which the pure Na gluconate is crystallized. The residual Na gluconate mother liquor after crystallizing may be mixed with the mineral mix and granulated in a manner known in itself in the art. Naturally, pure Na gluconate may equally be used as it is for granulating agent in the mineral mix.

The mineral mix of the invention may contain any physiologically tolerated mineral substances and trace elements whatsoever used in feed mixes. One may particularly contemplate calcium, e.g. 7 to 10, advantageously 14 to 21% by weight, phosphorus 3 to 16, advantageously 5 to 12% by weight, sodium e.g. 2 to 9, advantageously 4 to 6% by weight, sodium chloride e.g. 4 to 18, advantageously 8 to 13% by weight, magnesium e.g. 2 to 15, advantageously 3 to 9% by weight. The trace element may be e.g. iron e.g. 20 to 100, advantageously 40 to 60 mg/kg, copper e.g. 300 to 1000, advantageously 500 to 700 mg/kg, zinc e.g. 1600 to 5000, advantageously 3000 to 3700 mg/kg, manganese e.g. 500 to 2000, advantageously 1000 to 1500 mg/kg, iodine e.g. 20 to 100, advantageously 30 to 70 mg/kg, cobalt e.g. 20 to 100, advantageously 30 to 70 mg/kg, selenium e.g. 2 to 15, advantageously 4 to 11 mg/kg, molybdenum e.g. 4 to 12, advantageously 6 to 10 mg/kg, and vitamins, such as vitamins A, D and/or E.

The granulated mineral mix of the invention further contains advantageously a powdering agent, e.g. CaCO₃ and/or talc, e.g. 0 to 3, suitably 2 to 3% by weight. By effect of the powdering agent the flowing property and handling convenience of the granulated mineral mixes are further enhanced. The particle size of the powdering agent is conventional, i.e., it is known in connection with feed handling in general.

Granulating may be effected e.g. by means of disk granulation, mixing granulation or by other granulating methods known in the art.

When disk granulation is used, formation of granulate takes place in that the dry matter and the liquid bonding agent are conveyed in continuous flow to the granulator, where the mass is rubbed against the bottom. The particles will then become adherent to each other by effect of friction of rolling and granules are formed, growing in snowball manner. The disk part of the granulator has been disposed in oblique position against the horizontal. Size and shape of the granules can be controlled by means of the inclination of the disk component, the speed of rotation and the quantity and consistency of the bonding agent, and other parameters. The production parameters include staying time, mode of spraying the bonding liquid, and spraying point.

In mixing granulation the dry matter particles of the mineral mix are urged into a powerful vortex flow, continuously feeding dry matter and granulating liquid to the granulation process. The dry matter particles are then bonded to each other with the aid of the bonding agent and such granules as are desired will form. The production parameters include, for instance, the speed of rotation of the mixing rotor, the shape and angles of the rotor ploughs, and the staying time. The mode of liquid spraying has no such great influence as in disk granulation. Examples of mixing granulators known in the art include the PK-NIRO-ATOMIZER granulator, in which the granulation drum has been disposed to rotate about an axis, and the LÖDIGE granulator, in which the rotor has been disposed to rotate within a stationary drum.

The granulation procedures and apparatus are known in themselves in the art and are not described in any greater detail in this context.

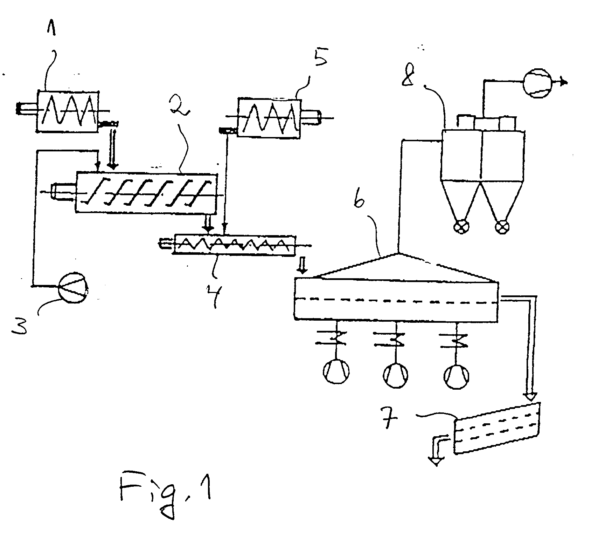

The invention is described in detail in the following with the aid of embodiment examples and referring to Fig. 1, which presents in the form of a flow chart a procedure according to the invention for manufacturing mineral mix.

### Example 1

In the experiment, granulated mineral feed mix was prepared applying a process as illustrated by Fig. 1, with a continuous action granulation mixer for granulator. In the experiment the mineral mix was dispensed in dry form with a dispensing means 1 to the continuous action granulation mixer 2, to which the granulation liquid was dispensed with a pump 3. From the granulation mixer (type: Lödige KM 150) the mineral mix was conducted to a screw conveyor 4. where the granules were powdered, i.e., the powdering agent was added to them with a dispensing means 5. Finally, the granulated product thus obtained was dried in a floating bed dryer (type: Sulzer Escher Wyss) 6, and cooked. The product thus obtained was screened with a planar sieve 7 into fractions <1 mm, 4<>1 mm and >4 mm. The dust was eliminated with a dust separator 8.

In Experiment 1, 15 kg of Basic mineral mix 1 were granulated, adding to the mix 6% molasses and 3% Na gluconate, in connection with pelleting. In Experiment 2, to 15 kg of Basic mineral mix 1 were added 3.5% Na gluconate and 7% molasses, in connection with pelleting, and in Experiment 3, to the Basic mineral mix were added 3.5% Na gluconate and 7% molasses in one solution in connection with granulation. The flowing quality of the ultimate product obtained in Experiment 3 was inferior to that of the products in Experiments 1 and 2, but the yield of granules (1 to 4 mm) was best in Experiment 3. In Experiment 4, the product was powder-coated, that is, 2 to 4% by weight of calcium were added; the flowing quality of the product was then substantially better. The yield (1 to 4 mm granules) was about 75% in Experiment 4.

Basic mineral mix 1 contained: Ca 19.0% by weight, P 7.5% by weight, Na 4.4% by weight, NaCl 8.5% by weight, Mg 5.5% by weight, Fe 450 mg/kg, Cu 540 mg/kg, Zn 3420 mg/kg, Mn 1180 mg/kg, J 40 mg/kg, Co 40 mg/kg, Se 10 mg/kg, Mo 8 mg/kg, aromatics 500 mg/kg, and vitamins A and D. The moisture content at granulation was about 19% by weight, moisture content of the completed product 2.5% by weight.

### Example 2

Granulation was carried out with the aid of a Lödige mixing granulator.

In this experiment Mineral mix 2 was granulated, 6% by weight Na gluconate were added; the yield (1 to 4 mm granules) was 55%.

Mineral mix 2 contained: Ca 14.5% by weight, P 11.5% by weight, Na 5.5% by weight, NaCl 11.0% by weight, Mg 3.5% by weight, and trace elements Fe 60 mg/kg, Cu 590 mg/kg, Zn 3250 mg/kg, Mn 1120 mg/kg, J 50 mg/kg, Co 60 mg/kg, Se 50 mg/kg, Mo 8 mg/kg, and vitamins D and E.

The embodiment examples are meant to illustrate the invention without in any way confining it.

## Claims

1. A granulated mineral feed mix for domestic animals containing more than 75 % by weight mineral substances, characterized in that the mix contains Na gluconate as a bonding agent in an amount of 1,5 to 6 % by weight.

2. Mineral feed mix according to claim 1, characterized in that the mix contains Na gluconate 2 to 5 % by weight.

3. Mineral feed mix according to claims 1 or 2, characterized in that the mix contains Na citrate, Na oxalate, Na lactate, Na acetate, Na fumarate and/or Na succinate in an amount of 30 to 80 % by weight calculated on the Na gluconate quantity.

4. Mineral feed mix according to any one of claims 1-3, characterized in that the mix contains molasses in an amount of 4 to 15 % by weight.

5. Mineral feed mix according to any one of claims 1-4, characterized in that the granules are bigger than 1 mm but smaller than 4 mm.

6. Procedure for manufacturing mineral feed mix for domestic animals containing more than 75 % by weight minerals wherein a bonding agent is added to the mix and the mix is granulated using disk or mixing granulation, characterized in that 1,5 to 6 % by weight of Na gluconate is used as a granulation agent.

7. Procedure according to claim 6, characterized in that as a granulating agent mainly Na gluconate and Na salts or organic acids, such as Na citrate, Na oxalate, Na lactate, Na acetate, Na fumarate and/or Na succinate is used.

8. Procedure according to claim 6 or 7, characterized in that as a granulating agent a Na gluconate solution obtained in connection with Na gluconate fermentation and/or Na gluconate mother liquor obtained when crystallizing Na gluconate is used.

9. Procedure according to any one of claims 6-8, characterized in that the granulated product obtained is screened with a sieve into a fraction of 1 mm to 4 mm, giving a yield of 55 % or more.

10. A mineral feed mix according to claim 4, characterized in that the mix contains molasses in an amount of 4 to 10 % by weight.

11. A mineral feed mix according to any one of claims 4 or 10, characterized in that the mix contains Na citrate, Na oxalate, Na lactate, Na acetate, Na fumarate and/or Na succinate in an amount of 30 to 80 % by weight calculated on the Na gluconate quantity.

## Patentansprüche

1. Granuliertes Mineral-Mischfuttermittel für Haustiere, enthaltend mehr als 75 Gew.-% Mineralsubstanzen, **dadurch ge****kennzeichnet,** daß das Gemisch Na-Gluconat als Bindemittel in einer Menge von 1,5 bis 6 Gew.-% enthält,

2. Mineral-Mischfuttermittel nach Anspruch 1, **dadurch ge****kennzeichnet,** daß das Gemisch 2 bis 5 Gew.-% Na-Gluconat enthält.

3. Mineral-Mischfuttermittel nach den Ansprüchen 1 oder 2, **dadurch gekennzeichnet,** daß das Gemisch Na-Citrat, Na-Oxalat, Na-Lactat, Na-Acetat, Na-Fumarat und/oder Na-Succinat in einer Menge von 30 bis 80 Gew.-%, bezogen auf die Na-Gluconat-Menge, enthält.

4. Mineral-Mischfuttermittel nach einem der Ansprüche 1 bis 3, **dadurch gekennzeichnet,** daß das Gemisch Melasse in einer Menge von 4 bis 15 Gew.-% enthält.

5. Mineral-Mischfuttermittel nach einem der Ansprüche 1 bis 4, **dadurch gekennzeichnet**, daß die Granalien bzw. Körner größer als 1 mm, jedoch kleiner als 4 mm sind.

6. Verfahren zur Herstellung von Mineral-Mischfuttermittel für Haustiere, enthaltend mehr als 75 Gew.-% Mineralien, bei dem ein Bindemittel dem Gemisch zugegeben wird und das Gemisch unter Verwendung einer Scheiben- oder Mischgranulierung granuliert wird, **dadurch gekennzeichnet,** daß 1,5 bis 6 Gew.-% Na-Gluconat als Granulierungsmittel verwendet wird.

7. Verfahren nach Anspruch 6, **dadurch gekennzeichnet,** daß als Granulierungsmittel hauptsächlich Na-Gluconat und Na-Salze oder organische Säuren, wie Na-Citrat, Na-Oxalat, Na-Lactat, Na-Acetat, Na-Fumarat und/oder Na-Succinat verwendet werden.

8. Verfahren nach den Ansprüchen 6 oder 7, **dadurch** **gekennzeichnet,** daß als Granulierungsmittel eine Gluconat-Lösung, erhalten in Verbindung mit Na-Gluconatgärung und/oder Na-Gluconatmutterlauge, die beim Auskristallisieren von Na-Gluconat erhalten wird, verwendet wird.

9. Verfahren nach einem der Ansprüche 6 bis 8, **dadurch ge****kennzeichnet,** daß das erhaltene granulierte Produkt mit einem Sieb in eine Fraktion von 1 mm bis 4 mm mit einer Ausbeute von 55 % oder mehr gesiebt wird.

10. Mineral-Mischfuttermittel nach Anspruch 4, **dadurch ge****kennzeichnet,** daß das Gemisch Melasse in einer Menge von 4 bis 10 Gew.-% enthält.

11. Mineral-Mischfuttermittel nach einem der Ansprüche 4 oder 10, **dadurch gekennzeichnet,** daß das Gemisch Na-Citrat, Na-Oxalat, Na-Lactat, Na-Acetat, Na-Fumarat und/oder Na-Succinat in einer Menge von 30 bis 80 Gew.-%, bezogen auf die Na-Gluconatmenge, enthält.

## Revendications

1. Mélange alimentaire minéral granulé pour animaux domestiques contenant plus de 75 % en poids de substances minérales, caractérisé en ce que le mélange contient du gluconate de sodium comme liant dans une quantité en poids de 1,5 à 6 %.

2. Mélange alimentaire minéral selon la revendication 1, caractérisé en ce que le mélange contient de 2 à 5 % de gluconate de sodium en poids.

3. Mélange alimentaire minéral selon les revendications 1 ou 2, caractérisé en ce que le mélange contient du citrate de sodium, de l'oxalate de sodium, du lactate de sodium, de l'acétate de sodium, du fumarate de sodium et/ou du succinate de sodium dans une quantité de 30 à 80 % en poids calculée sur la quantité de gluconate de sodium.

4. Mélange alimentaire minéral selon l'une quelconque des revendications de 1 à 3, caractérisé en ce que le mélange contient des mélasses dans une quantité de 4 à 15 % en poids.

5. Mélange alimentaire minéral selon l'une quelconque des revendications de 1 à 4, caractérisé en ce que les granulés sont plus gros que 1 mm mais plus petits que 4 mm.

6. Procédé de fabrication d'un mélange alimentaire minéral pour animaux domestiques contenant plus de 75 % de minéraux en poids dans lequel un liant est ajouté au mélange et le mélange est granulé par un disque ou un mélangeur de granulation, caractérisé en ce que 1,5 à 6 % de gluconate de sodium en poids sont utilisés comme agent de granulation.

7. Procédé selon la revendication 6, caractérisé en ce que comme agent de granulation est utilisé principalement le gluconate de sodium et les sels de sodium ou les acides organiques, tels que le citrate de sodium, l'oxalate de sodium, le lactate de sodium, I'acétate de sodium, le fumarate de sodium et/ou le succinate de sodium.

8. Procédé selon le revendication 6 ou 7, caractérisé en ce que comme agent de granulation est utilisée une solution de gluconate de sodium obtenue à partir de la fermentation du gluconate de sodium et/ou une liquideur mère de gluconate de sodium obtenue quand le gluconate de sodium est cristallisant.

9. Procédé selon l'une quelconque des revendications de 6 à 8, caractérisé en ce que le produit granulé obtenu est tamisé avec un tamis permettant le passage de particules de 1 mm pour 4 mm, donnant un rendement de 55 % ou plus.

10. Mélange alimentaire minéral selon la revendication 4, caractérisé en ce que le mélange contient des mélasses dans une quantité en poids de 4 à 10 %.

11. Mélange alimentaire minéral selon l'une quelconque des revendications de 4 à 10, caractérisé en ce que le mélange contient du citrate de sodium, de l'oxalate de sodium, du lactate de sodium, de l'acétate de sodium, du fumarate de sodium et/ou du succinate de sodium dans une quantité en poids de 30 à 80 % calculée sur la quantité de gluconate de sodium.
